(19) Europäisches Patentamt
European Patent Office
Office européen des brevets

(11) **EP 1 315 954 B1**

(12) **EUROPÄISCHE PATENTSCHRIFT**

(45) Veröffentlichungstag und Bekanntmachung des Hinweises auf die Patenterteilung:
**07.01.2009  Patentblatt 2009/02**

(21) Anmeldenummer: **01971656.2**

(22) Anmeldetag: **31.08.2001**

(51) Int Cl.:
*G01L 3/10* (2006.01)      *G01D 5/244* (2006.01)

(86) Internationale Anmeldenummer:
**PCT/DE2001/003288**

(87) Internationale Veröffentlichungsnummer:
**WO 2002/018894 (07.03.2002 Gazette 2002/10)**

(54) **VERFAHREN ZUR BESTIMMUNG EINER WINKELDIFFERENZ AUS PHASENSIGNALEN**

METHOD FOR DETERMINING AN ANGLE DIFFERENTIAL FROM PHASE SIGNALS

PROCEDE POUR DETERMINER UNE DIFFERENCE ANGULAIRE A PARTIR DE SIGNAUX DE MISE EN PHASE

(84) Benannte Vertragsstaaten:
**DE ES FR GB IT**

(30) Priorität: **31.08.2000  DE 10042656**

(43) Veröffentlichungstag der Anmeldung:
**04.06.2003  Patentblatt 2003/23**

(73) Patentinhaber: **ROBERT BOSCH GMBH**
**70442 Stuttgart (DE)**

(72) Erfinder:
• **STEINLECHNER, Siegbert**
  **71229 Leonberg (DE)**
• **DORFMUELLER, Lutz**
  **70839 Gerlingen (DE)**
• **WENZLER, Axel**
  **70569 Stuttgart (DE)**
• **NOLTEMEYER, Ralf**
  **73249 Wernau (DE)**

(56) Entgegenhaltungen:
**EP-A- 0 980 000          DE-A- 19 506 938**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Stand der Technik

Bei einigen technischen Meßaufgaben besteht die Notwendigkeit, die Winkelstellung einer Welle und gleichzeitig eine Winkeldifferenz zu einem zweiten (Wellen-) Element zu bestimmen. Bspw. kann aus der Winkeldifferenz zweier über einen Torsionsstab verbundener Wellenelemente das an der Welle angreifende Drehmoment bestimmt werden.

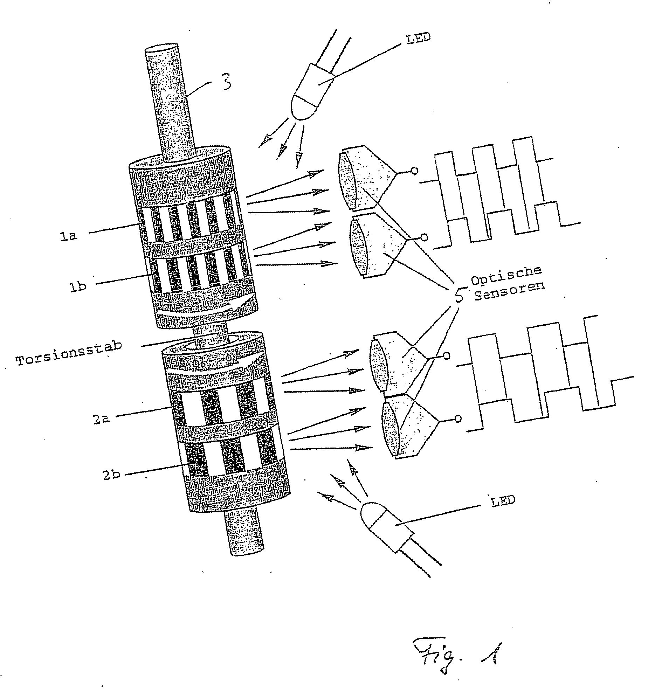

Als Anwendungsbeispiel sei ein an der Lenkwelle eines KFZ angebrachter TAS (Torque-Angle-Sensor) genannt, der gleichzeitig den Lenkwinkel und das Lenkmoment ausgeben soll (vgl. Figur 1). Dazu werden die Winkel auf beiden Seiten eines Torsionselements gemessen. Das Drehmoment M berechnet sich dann aus der Differenz $\delta$ dieser Winkel zu

$$M = c \cdot \delta$$

(c = Federrate des Torsionselements).

Die einzelnen Winkelmessungen müssen dabei i.d.R. sehr genau sein, da in den i.allg. recht keinen Differenzwinkel die Ungenauigkeiten der beiden Winkelbestimmungen direkt eingehen.

Zur hochgenauen Messung der einzelnen Winkel werden bspw. mehrere optische oder magnetische Codespuren bzw. Multipolräder eingesetzt, welche mit einem digitalen Code versehen sind. Bei einer robusteren Variante werden die Spuren nicht mit einem digitalen Code versehen, sondern enthalten verschiedene Phaseninformationen. Diese Phaseninformationen werden optisch oder magnetisch erfasst und in entsprechende (elektrische) Phasensignale umgewandelt, welche entweder durch ein- bzw. mehrfache Anwendung des klassischen oder modifizierten Noniusverfahrens ausgewertet werden (z.B. DE 19506938) oder die Winkelbestimmung erfolgt mit einem Verfahren zur Auswertung N-dimensionaler Phasensignale.

Aus der EP 0 980 000 A1 ist eine Vorrichtung zur Erfassung der Drehstellung, Drehzahl und/oder Drehrichtung eines Rotors eines Elektromotors bekannt, bei dem mindestens zwei in Drehrichtung des Rotors versetzt angeordnete Drehstellungssensoren mit definierten Schaltzuständen ausgewertet werden. Aus den Ausgangssignalen dieser Sensoren werden die Drehstellung, die Drehzahl sowie gegebenenfalls die Drehrichtung des Rotors ermittelt.

### Aufgabe der Erfindung

Die Aufgabe der Erfindung ist die gleichzeitige und aufwandsgünstige Bestimmung von Winkel $\phi$ und Winkeldifferenz $\delta$ aus zwei mehrdeutigen Phasenmessungen $\alpha_1$ und $\alpha_2$. Die Winkeldifferenz wird dabei nicht als Differenz zweier Winkel berechnet, sondern direkt und aufwandsgünstig aus den mehrdeutigen Phasenmessungen bestimmt. Gleichzeitig wird aus den untereinander verschobenen und mehrdeutigen Phasenmessungen ein eindeutiger Winkelwert gewonnen.

Damit kann beispielsweise gleichzeitig der Verdrehwinkel $\phi$ einer Welle und das an ihr angreifende Drehmoment bestimmt werden. Die beiden mehrdeutigen Phasensignale $\alpha_1$ und $\alpha_2$ werden dabei unter Einsatz von RADAR, Laser, optischen, magnetischen oder sonstigen Sensorprinzipien gewonnen. Dabei ist es oft notwendig, diese Phasensignale jeweils wiederum aus mehreren Phasenspuren (vgl. beispielsweise die Spuren 1a und 1b, bzw. 2a und 2b in Figur 1) mit Hilfe diese Noniusprinzips (klassisch oder modifiziert, eventuell kaskadiert oder N-dimensional) zu gewinnen.

Ein weiteres mögliches Einsatzgebiet ist die Bestimmung der Winkeldifferenz zwischen zwei Phasenspuren, welche bspw. durch Fertigungs- oder Einbautoleranzen (Tiltwinkel) bedingt ist. Die Kenntnis dieser Winkeldifferenz ist für eine mögliche Korrektur der durch diese Toleranzen bedingten Fehler in der Signalauswertung notwendig.

Die Erfindung ist insbesondere dazu geeignet, in einem TAS (Torque-Angle-Sensor) eingesetzt zu werden.

### Vorteile der Erfindung

Kern der Erfindung ist ein Verfahren und eine Schaltungsanordnung zur direkten und gleichzeitigen Bestimmung von Winkel $\phi$ und Winkeldifferenz $\delta$ aus zwei mehrdeutigen Phasenmessungen $\alpha_1$ und $\alpha_2$, welche um die unbekannte Winkeldifferenz $\delta$ verschoben sind.

Im Gegensatz zu den bekannten Verfahren muss dabei nicht der Umweg über die beiden Absolutwinkel gemacht werden, was den Schaltungsaufwand deutlich reduziert.

Gleichzeitig werden durch das Verfahren die Messfehler in den einzelnen Phasenspuren deutlich reduziert.

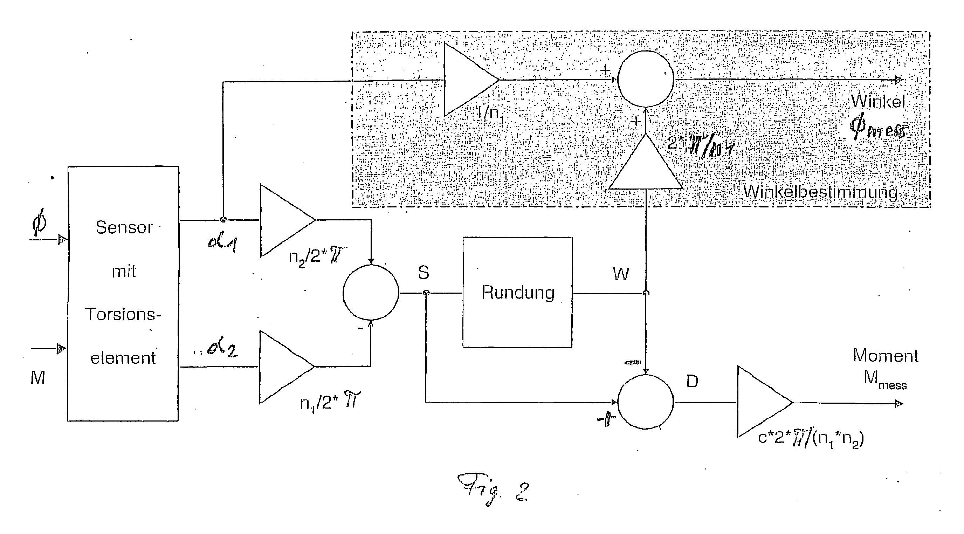

Der Gewinn gegenüber den bekannten Verfahren wird besonders deutlich, wenn nur die Winkeldifferenz zu bestimmen ist. In diesem Fall vereinfacht sich das in Figur 2 dargestellte Blockschaltbild der Anordnung nochmals.

### Beschreibung

Figur 1 zeigt eine Realisierungsmöglichkeit für einen optischen Winkel- und Drehmomentsensor, in dem die Erfindung mit Vorteil eingesetzt werden kann. Figur 2 zeigt das Blockschaltbild der Anordnung zur Bestimmung von Winkel und Drehmoment.

Die nun folgende Beschreibung orientiert sich an einer bevorzugten Ausführungsform zur Messung von Winkel und Drehmoment (TAS). Der Fachmann sollte jedoch erkennen, dass die Erfindung auch für andere Anwendungs- und Ausführungformen zum Einsatz kommen kann.

Figur 1 zeigt ein Beispiel eines optischen TAS mit insgesamt 4 Phasenspuren 1a, 1b, 2a und 2b. Zwischen den oberen Spuren 1a, 1b und den unteren (2a, 2b) befindet sich ein Torsionsstab. Die Lenkwelle befindet sich in der Winkelposition $\phi$. Durch das an ihr wirkende Drehmoment ist die Gruppe mit den unteren Spuren (2a, 2b) um den Winkel $\delta$ gegenüber der oberen Gruppe (Spuren 1a, 1b) verdreht.

Aus den beiden oberen Spuren 1a, 1b wird z.B. mit Hilfe des modifizierten Noniusverfahrens ein erstes Phasensignal $\alpha_1$ gewonnen, welches mit dem mechanischen Drehwinkel $\phi$ der Welle über den Zusammenhang

$$\alpha_1 = n_1 \cdot \Phi$$

verbunden ist. Analog gilt für das aus den unteren Spuren gewonnene, zweite Phasensignal $\alpha_2$,

$$\alpha_2 = n_2 \cdot (\Phi - \delta)$$

$n_1$ und $n_2$ sind dabei resultierende Periodenzahlen der beiden Spurengruppen, d.h., das aus den Spuren 1a und 1b gewonnene Phasensignal wiederholt sich bei einer (mechanischen) Umdrehung $n_1$ mal; $\delta$ ist die Winkeldifferenz zwischen den beiden Spurengruppen. Die tatsächlichen Messwerte der Phasensignale liegen immer im Bereich 0 bis $2\pi$, sind also immer nur bis auf ganzzahlige Vielfache von $2\pi$ bestimmt.

Insgesamt liefert ein Sensor (Figur 2) also die beiden Phasensignale $\alpha_1$ und $\alpha_2$, welche in der Regel digital vorliegen. Diese werden zunächst gewichtet aufsummiert und liefern das Signal S. Diese Summation kann bspw. folgendermaßen ausgeführt werden:

$$S = \frac{1}{2\pi}\left(n_2 \cdot \alpha_1 - n_1 \cdot \alpha_2\right)$$

Die Rundung dieses Signals auf ganzzahlige Werte liefert das ganzzahlige Signal W, welches wiederum von S abgezogen wird. Als Ergebnis dieser Operation erhält man das Signal D, den nichtganzzahligen Anteil von S. Bei einer digitalen Implementierung kann dieser nichtganzzahlige Anteil oft sehr einfach direkt aus der Zahlendarstellung von S gewonnen werden.

Das Signal D ist der Winkeldifferenz $\delta$ direkt proportional und somit ein Maß für den Differenzwinkel bzw das Drehmoment und kann bei Bedarf mit Hilfe eines Multiplizierers in das Drehmoment umskaliert werden.

Gleichzeitig kann der Winkel $\phi$ aus dem ganzzahligen Signal W und dem Phasenwert $\alpha_1$ mit Hilfe einer gewichteten Addition gewonnen werden. Diese Addition erfolgt modulo $2\pi$. Für den Fall $n_1 = n_2 + 1$ berechnet sich der Winkel $\phi$ wie in Bild 2 dargestellt zu:

$$\Phi_{mess} = \frac{\alpha_1}{n_1} + \frac{W \cdot 2 \cdot \pi}{n_1}$$

Die vorgestellte Schaltungsanordnung reduziert weiterhin die in den beiden Phasensignalen $\alpha_1$ und $\alpha_2$ vorhandenen Messfehler $e_1$ und $e_2$ um die Periodenzahlen:

- Fehler im Winkel $\phi$: $e_1/n_1$
- Fehler im Differenzwinkel $\delta$: $e_2/n_2 - e_1/n_1$

Bei der Dimensionierung bzw. Ausgestaltung der Anordnung sind noch die folgenden Punkte zu beachten:

- Will man einen eindeutigen Winkel f bestimmen, so dürfen die Periodenzahlen $n_1$ und $n_2$ keinen gemeinsamen Teiler enthalten.

- Das Produkt aus $n_1$ und $n_2$ legt die maximale zulässige Winkeldifferenz fest. Bei $|\delta| < 6°$ gilt bspw. $n_1 n_2 \leq 30$.

- Werden die Winkelwerte binär auf $2\pi$ normiert dargestellt, sind alle erforderlichen Multiplikationen ganzzahlig oder rational ausführbar.

- Das Verfahren ist besonders geeignet für den TAS (Torque-Angle-Sensor).

- Die erforderlichen Gewichte bzw. Multipliziererkoeffizienten müssen nur einmalig beim Systementwurf bestimmmt werden.

- Das Verfahren lässt sich auch sehr gut einsetzen, um die (feste) Winkeldifferenz zwischen Phasenspuren zu bestimmen, welche bspw. durch Einbautoleranzen (Tiltwinkel) verursacht sind.

- Wird nur die Winkeldifferenz benötigt, so wird die Anordnung weiter vereinfacht (der grau unterlegte Teil in Fig 2 muss in diesem Fall nicht realisiert werden); der Vorteil gegenüber den bisherigen Verfahren wird somit nochmals größer.

- Wird nur die Winkeldifferenz benötigt, so dürfen die Periodenzahlen $n_1$ und $n_2$ einen gemeinsamen Teiler enthalten; eine eindeutige Bestimmung des Winkels $\phi$ ist dann allerdings prinzipiell unmöglich.

- Das Verfahren lässt sich auch auf andere Systeme übertragen, die entsprechende Ausgangssignale liefern, wie z.B. Lineargeber, Mehrfrequenz-Abstandsmesssysteme.

- Die vorgeschlagene Anordnung kann analog oder digital realisiert werden.

- Die vorgeschlagene Schaltung lässt sich sehr einfach in einer digitalen Auswerteschaltung realisieren.

**Patentansprüche**

1. Verfahren zur Bestimmung einer Winkeldifferenz ($\delta$) an einer geteilten Welle (3) mit Phasenspuren (1a, 1b bzw. 2a, 2b) und einem zwischengeschalteten Torsionsstab, wobei mittels zugeordneter Sensoren (5) und einer Auswerteeinheit in Bezug auf eine Umdrehung der Welle (3) jeweils mehrdeutige Phasensignale ($\alpha_1$, $\alpha_2$) gewonnen werden, **dadurch gekennzeichnet,**

   - **dass** wenigstens zwei Phasensignale ($\alpha_1$, $\alpha_2$) zu einem Signal S gewichtet aufsummiert werden,
   - **dass** von dem Signal S ein nicht ganzzahliger Anteil D gebildet wird, wobei der Anteil D proportional der Winkeldifferenz ($\delta$) ist und
   - **dass** aus der Winkeldifferenz ($\delta$) durch Multiplikation mit der Federrate (C) des zwischengeschalteten Torsionsstabes das an der Welle (3) angreifende Drehmoment (M) bestimmt wird.

2. Verfahren nach Anspruch 1, **dadurch gekennzeichnet, dass** aus dem ganzzahligen Anteil des Signals S und einem der Phasenmesswerte ($\alpha_1$ oder $\alpha_2$) mit Hilfe einer gewichteten Summation der Drehwinkel ($\Phi$) eindeutig bestimmt wird.

3. Verfahren nach Anspruch 1 oder 2, **dadurch gekennzeichnet, dass** der Drehwinkel der Lenkwinkel der Lenkwelle eines KFZ ist und das Drehmoment das Lenkmoment ist.

**Claims**

1. Method for determining an angular difference ($\delta$) on a divided shaft (3) having phase tracks (1a, 1b and 2a, 2b) and an interposed torque rod, ambiguous phase signals ($\alpha_1$, $\alpha_2$) respectively being obtained using associated sensors (5) and an evaluation unit with reference to one revolution of the shaft (3), **characterized**

   - **in that** at least two phase signals ($\alpha_1$, $\alpha_2$) are summed in weighted fashion to form a signal S,
   - **in that** a non-integral component D is formed from the signal S, the component D being proportional to the angular difference ($\delta$), and
   - **in that** the torque (M) acting on the shaft (3) is determined from the angular difference ($\delta$) by multiplying by the spring rate (C) of the interposed torque rod.

2. Method according to Claim 1, **characterized in that** the angle of rotation ($\Phi$) is unambiguously determined from the integral component of the signal S and one of the phase measured values ($\alpha_1$ or $\alpha_2$) with the aid of a weighted summation.

3. Method according to Claim 1 or 2, **characterized in that** the angle of rotation is the steering angle of the steering shaft of a motor vehicle and the torque is the steering moment.

**Revendications**

1. Procédé pour déterminer une différence angulaire ($\delta$) sur un arbre divisé (3) avec traces de phase (1a, 1b, respectivement 2a, 2b), et une barre de torsion interposée, des signaux de phase multivalents ($\alpha_1$, $\alpha_2$) étant obtenus au moyen de capteurs (5) associés et d'une unité d'analyse en fonction d'une rotation de l'arbre (3), **caractérisé en ce qu'**

   - au moins deux signaux de phase ($\alpha_1$, $\alpha_2$) sont additionnés de manière pondérée pour donner un signal S,
   - une proportion D non entière est formée à partir du signal S, la proportion D étant proportionnelle à la différence angulaire ($\delta$), et
   - le couple (M) agissant sur l'arbre (3) est déterminé à partir de la différence angulaire ($\delta$) par multiplication par la caractéristique élastique (C) de la barre de torsion interposée.

2. Procédé selon la revendication 1, **caractérisé en ce que** l'angle de rotation ($\Phi$) est déterminé univoquement à partir de la proportion entière du signal S et d'une des valeurs de mesure de phase ($\alpha_1$ ou $\alpha_2$) à l'aide d'une addition pondérée des angles de rotation ($\Phi$).

3. Procédé selon la revendication 1 ou 2, **caractérisé en ce que** l'angle de rotation est l'angle de direction de l'arbre de transmission d'un véhicule automobile et le couple est le couple de transmission.

3

LED

1a

1b

Torsionsstab

2a

2b

5 Optische Sensoren

LED

Fig. 1

Fig. 2

EP 1 315 954 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19506938
- EP 0980000 A1